# EUROPEAN PATENT SPECIFICATION

(11) **EP 0 378 873 B1**
(45) Date of publication and mention of the grant of the patent: **03.02.1993**
(21) Application number: 89203180.8
(22) Date of filing: 13.12.1989
(51) Int. Cl.: C01B 17/90

(54) **Regeneration of exhausted sulfuric acid by means of hydrogen peroxide**
Regeneration von erschöpften Schwefelsäuren mittels Wasserstoffperoxyd
Régénération d'acide sulfurique épuisée au moyen d'eau oxygénée

(30) Priority: 16.12.1988 IT 2298888; 12.10.1989 IT 2200689
(43) Date of publication of application: 25.07.1990
(73) Proprietor: ENICHEM SYNTHESIS S.p.A., 90139 Palermo (IT)
(72) Inventor: Villanti, Alberto, I-20134 Milan (IT)
(74) Representative: Roggero, Sergio

(56) References cited:
- EP-A- 0 117 986
- DE-A- 2 404 613
- DE-A- 2 516 173
- GB-A- 2 110 681
- CHEMICAL ABSTRACTS, vol. 92, no. 6, 11 February 1980, page 115, abstract no. 43938d, Columbus, Ohio, US; E.I. EL'BERT et al.: "Removal of organic impurities from spent sulfuric acid from the production of cation exchangers" & Khim. Prom-st (Moscow) 1979, (5), 289-91

## Description

The present invention relates to a process for the production of purified sulfuric acid, and for the recovery of the organic fraction from an exhausted sulfuric acid, polluted owing to the presence of an aryl-sulfonic acid.

In several industrial chemical processes, considerable amounts are generated of exhausted sulfuric acid polluted by the presence of organic byproducts, in particular aryl-sulfonic acids deriving from parasitic sulfonation reactions.

For example, DDT [1,1,1-trichloro-2,2-di-(4-chlorophenyl)-ethane], which is produced at the industrial level by means of the reaction of chloral with chlorobenzene in a medium of sulfuric acid, generates, as a byproduct, an exhausted sulfuric acid which typically contains up to about 50% by weight of chlorobenzene-sulfonic acid. The disposal of this effluent, or of similar effluents, constitutes a technical problem which to date has not found yet a satisfactory solution.

So, e.g., treating exhausted sulfuric acid, polluted owing to the presence of an organic fraction, with concentrated nitric acid in order to oxidize the organic compounds contained in it, such as described, e.g., by H.R. Kueng and P. Reimann in Chemical Engineering, Apr. 19th, 1982, pages 72-73, is known. However, the oxidation with nitric acid takes place under drastic conditions, at high temperatures, of a round 300°C, and causes the development of nitrous gases which have to be disposed of.

The purpose of the present invention is a simple and economically advantageous process which makes it possible high-purity sulfuric acid to produce, and to recover the organic fraction to be recovered, by starting from exhausted sulfuric acid, polluted owing to the presence of arylsulfonic acids, while overcoming the drawbacks which affect the prior art as briefly mentioned hereinabove.

In accordance therewith, the present invention relates to a process for the production of purified sulfuric acid, and for the recovery of the organic fraction from an exhausted sulfuric acid, polluted owing to the presence of an aryl-sulfonic acid, characterized in that:
(a) said exhausted sulfuric acid is submitted to a heating at a temperature comprised within the range of from 180 to 250°C, in the presence of an amount of water in the liquid state or of overheated water vapour of at least 17 parts by weight per each 100 parts by weight of sulfuric acid contained in the reaction medium, in order to hydrolyze (de-sulfonate) the arylsulfonic acid and produce sulfuric acid and the corresponding de-sulfonated arylic compound, with this latter being removed from the reaction medium by means of an azeotropic distillation;
(b) the water content of the product coming from step (a) is reduced in order to increase the concentration of sulfuric acid up to a value of at least 92% by weight;
(c) the product coming from step (b) is submitted to a treatment of oxidation with hydrogen peroxide, carried out at a temperature comprised within the range of from 100 to 180°C; and
(d) sulfuric acid is recovered from the product coming from the step (c) as a clear, colourless liquid, free, or substantially free, from organic impurities.

The process according to the present invention is disclosed in the following by referring to the treatment of exhausted sulfuric acid coming from the process of production of DDT, polluted owing to the presence of chlorobenzene-sulfonic acid, in particular owing to the presence of para-chlorobenzene-sulfonic acid. However, the process can be obviously applied to the treatment of the effluents from the process of production of bis-4-chlorophenyl-sulfone by starting from chlorobenzene and oleum, or of similar effluents.

According to the process of the present invention, such an exhaused acid is submitted, in step (a), to a treatment of hydrolysis (de-sulfonation) in the presence of water, at a high temperature. In this treatment, the exhausted acid is treated with an amount of water, constantly present in the reaction mixture, of at least 17 parts, and generally up to 33 parts by weight, per each 100 parts by weight of sulfuric acid. The minimum value of water concentration is critical, in that with lower concentrations, evident charring phenomena occur. The above stated upper limit of the amount of water is not particularly critic, but advantageously it should not be exceeded in that, in such a case, a decrease is caused in the boiling temperature of the reaction mass, with the rate of the hydrolysis reaction being consequently reduced. Furthermore, the presence of a larger amount of water makes its removal in the subsequent reaction step more expensive.

Under the preferred operating conditions, step (a) is carried out with a water amount constantly present in the reaction medium, of about 20-25 parts by weight per each 100 parts by weight of sulfuric acid. Water can be in the liquid form in the reaction medium, or it can be in the form of overheated water vapour. The temperature at which hydrolysis is carried out can generally be comprised within the range of from 180 to 250°C, with the preferred values being comprised within the range of from 190 to 220°C.

During the hydrolysis reaction , the reaction mass is advantageously submitted to good stirring, in that, in the absence of stirring, or with insufficient stirring, the formation of carbonaceous residues is favoured. Generally, a stirring speed within the range of from 50 to 1 000 rpm, and preferably of at least 500 rpm, is suitable. During the reaction of hydrolysis reaction, chlorobenzene is developed, which is removed from the reaction mixture as an azeotropic mixture with water. Chlorobenzene can hence be separated after the condensation of the azeotropic mixture, and the separation of the water phase. Therefore, in order to keep the composition of the reaction mixture within the desired range, during the course of the hydrolysis water is fed either continuously or batchwise. In particular, the present Applicant was able to find that optimum results are obtained when the amount of water so fed is equal to, or higher than, 8 mols, and is preferably equal to about 10 mols, per each mol of chlorobenzene-sulfonic acid submitted to hydrolysis. By operating under the above disclosed conditions, conversions of chlorobenzene-sulfonic acid are obtained, which are equal to, or higher than, about 99%, with practically quantitative yields to chlorobenzene, relative to converted chlorobenzene-sulfonic acid.

In step (b) of the process according to the present invention, the water content of the product coming from step (a) is reduced, in order to increase the concentration of sulfuric acid up to a value of at least 92% by weight, and, preferably, up to values of 95-96% by weight.

The decrease in water concentration can be accomplished by means of the normal techniques of vacuum evaporation. However, in the preferred embodiment of the process of the present invention, sulfur trioxide or oleum is added to the product from step (a), in such an amount as to increase the concentration of sulfuric acid in the resulting mixture up to the values as set forth above. For that purpose, sulfur trioxide as such can be used, or oleum with any suitable concentration of sulfur trioxide, e.g., with a concentration of sulfur trioxide within the range of from 10 to 65% by weight. In general, the use of sulfur trioxide or of an oleum with a higher concentration of sulfur trioxide is preferred, in order to prevent the mass to be treated from excessively increasing.

When the concentration of the acid in step (b) is carried out by means of water evaporation, according to the first embodiment of the invention, the desired result is reached, but an increase in COD values of 60-70% on average is caused. This increase is due, to a minor extent, to the mere effect of concentration; and is mainly due to the formation of sulfur dioxide, which takes place according to different mechanisms, at the temperatures used, and in the presence of carbon usually present as an impurity. Inasmuch as such phenomena do not occur when the technique of addition of sulfur trioxide or of oleum is adopted in step (b), the net effect of such an addition will be that the consumption of hydrogen peroxide in step (c) step is proportionally reduced.

In particular, the addition of sulfur trioxide or of oleum in step (b) of the present process leads to the following advantageous effects, as compared to the concentration of the acid by simple water evaporation:
- decrease of 40-50% in hydrogen peroxide consumption;
- improvement of the quality of purified acid, whose colour decreases from 25 to 5 APHA or less;
- ease and rapidity of adjustment, in step (b) of the process, of acid concentration to any desired value; and
- less problems as regards the facilities to be used.

According to the process of the present invention, the product coming from the former step (b) is submitted to a treatment of oxidation with hydrogen peroxide [(c) step].

For this purpose, a hydrogen peroxide is used, which has a concentration comprised within the range of from 20 to 70% by weight. The amount of hydrogen peroxide used (expressed as hydrogen peroxide at 100%) should be comprised within the range of from 3 to 7 parts by weight per each 100 parts by weight of sulfuric acid, in case in step (b) water is distilled off; or it will be comprised within the range of from 0.5 to 2.0 parts by weight per each 100 parts by weight of total sulfuric acid, when sulfur trioxide or oleum is added in step (b).

The temperatures at which step (c) is carried out can generally be comprised within the range of from 100 to 180°C, with the preferred values being of the order of 120-150°C. Although hydrogen peroxide displays its oxidating action also at lower temperatures, e.g., at room temperature, step (c) has to be carried out at the above stated temperatures in order to prevent hydrogen peroxide from accumulating, leading to a dangerous situation, as well as in order to cause the decomposition of possible peroxy-compounds of various kinds, which can be formed when the reaction mass comes into contact with hydrogen peroxide. In view of the above, the oxidation treatment can be advantageously carried out by gradually adding hydrogen peroxide to the reaction mass.

Another critical aspect is the concentration of the sulfuric acid which undergoes the oxidation treatment, with said concentration being kept at a value equal to, or higher than, 92% by weight. In fact, the present Applicant was able to observe that with acid concentrations lower than such a value, the decolorization proceeds slowly; requires larger amounts of hydrogen peroxide than the minimal necessary amounts for the oxidation of the organic substances contained in the reaction mass; and furthermore foaming phenomena are difficult to controll.

At the end of the oxidation treatment, purified sulfuric acid is recovered in step (d) step of the process and, if desired, can be submitted to a vacuum concentration, or it can be treated by means of the addition of sulfur trioxide or of oleum, in order to obtain a higher concentration acid.

Summing up, the process according to the present invention makes possible the recovery of raw materials from exhausted sulfuric acid practically completely, avoiding any environmental problems. Furthermore, the process is simple and economically advantageous, it can be carried out inside one single reaction vessel, and it makes possible the recovery of a high quality purified sulfuric acid which is clear and free, or substantially free, from chlorine and organic impurities.

The following experimental examples are reported in order to better illustrate the present invention.

### Example 1

A jacketed reactor of 2 litres of capacity with external oil circulation is used, which is equipped with a Claisen condenser, temperature detecting means, mechanical stirring means and connection fittings for connection with a vacuum pump and a metering pump.

1 kg of exhausted sulfuric acid containing about 50% by weight of chlorobenzene-sulfonic acid is charged to the reactor. Then water is added to the reactor in an amount of up to about 25 parts by weight per each 100 parts by weight of sulfuric acid contained inside the reactor. The mass, stirred at 500 rpm, is heated up to 205°C, with the hydrolysis of chlorobenzene-sulfonic acid being caused, and in the condenser the azeotropic mixture of water and monochlorobenzene, which develops from the reaction mixture, is collected. To the reactor, water is continuously fed by means of the metering pump, so as to keep the ratio of water to sulfuric acid constant, or about constant, during the course of the reaction of hydrolysis. The total amount of water thus fed is 460 g. The azeotropic mixture undergoes phase separation inside the condenser, with monochlorobenzene being separated from water. The reaction is continued for 4,5 hours and at the end of this time period about 288 g of monochlorobenzene is collected. The residue in the reactor is a product with a deep dark colour, constituted by about 800 g of sulfuric acid at a concentration of 77-78% by weight, with a content of less than 0.5% by weight of chlorobenzene-sulfonic acid, containing fine carbon particles in suspension.

The inner temperature of the reactor is adjusted to be 180°C, and the pressure is decreased down to 5 torr. The reaction mass is kept under these conditions for 15 minutes, with water being distilled off until its concentration in the residue decreases down to values of the order of 4-5% by weight.

The vacuum is then broken, and the inner reactor temperature is decreased down to a value of 140-150°C. 70 g of hydrogen peroxide at 60% by weight is gradually charged to the reactor within a 1-hour time. In that way, a sulfuric acid with a water content of 10-12% by weight, clear and with a transparent colour (25 APHA) is obtained, which is substantially free from organic matter.

### Example 2

The process is carried out in the same way as in Example 1, with the only exception that the hydrolysis water is fed as overheated water vapour, in such an amount as to maintain the inner temperature of the reactor at a value of the order of 205°C. Results fully similar to those of Example 1 are obtained.

### Example 3

The process is carried out in the same way as in Example 1 during the hydrolysis step of the exhausted sulfuric acid. To 221 g of the so treated sulfuric acid, containing 20% by weight of water, 789 g of oleum at 20% by weight of sulfur trioxide is added. The temperature of the so obtained reaction mass is adjusted to 130°C, and, with said temperature being controlled at such a value, 12.8 g of hydrogen peroxide at 60% by weight is gradually added.

1.005 g of purified and clear sulfuric acid is obtained which has a colour of 2.5 APHA, contains 2.5% by weight of water, and is substantially free from organic matters.

### Example 4

The process is carried out in the same way as in Example 1 in the hydrolysis step of exhausted sulfuric acid. To 462 g of so-treated sulfuric acid, containing 20% by weight of water, 538 g of oleum at 65% by weight of sulfur trioxide is added. The temperature of the so obtained mass is adjusted to the value of 135°C and, with said temperature being controlled at such a value, 28,5 g of hydrogen peroxide at 60% by weight is gradually added.

An amount of 1 009 g of purified, clear sulfuric acid is obtained, which has a colour of 5 APHA, contains 2.5% of water, and is substantially free from organic matter.

## Claims

1. Process for the production of purified sulfuric acid, and for the recovery of the organic fraction from an exhausted sulfuric acid, polluted owing to the presence of an aryl-sulfonic acid, characterized in that:
(a) said exhausted sulfuric acid is submitted to a heating at a temperature within the range of from 180 to 250°C, in the presence of an amount of water in the liquid state, or of overheated water vapour of at least 17 parts by weight per each 100 parts by weight of sulfuric acid contained in the reaction medium, in order to hydrolyze (de-sulfonate) the arylsulfonic acid and produce sulfuric acid and the corresponding de-sulfonated arylic compound, with this latter being removed from the reaction medium by means of an azeotropic distillation;
(b) the water content of the product coming from step (a) is reduced in order to increase the concentration of sulfuric acid up to a value of at least 92% by weight;
(c) the product coming from step (b) is submitted to a treatment of oxidation with hydrogen peroxide, carried out at a temperature comprised within the range of from 100 to 180°C; and
(d) From the product coming from step (c) sulfuric acid is recovered as a clear, colourless liquid, free, or substantially free, from organic impurities.

2. Process according to claim 1, characterized in that in step (a) the treatment is carried out with an amount of water within the range of from 17 parts to 33 parts by weight, and preferably of 20-30 parts by weight, per each 100 parts by weight of sulfuric acid, and at a temperature within the range of from 190 to 220°C.

3. Process according to claim 1, characterized in that in step (b) sulfuric acid is concentrated by distilling off water under vacuum.

4. Process according to claim 1, characterized in that in step (b) sulfuric acid is concentrated by means of the addition of sulfur trioxide, or of oleum.

5. Process according to claim 1, characterized in that in step (b), the concentration of sulfuric acid is increased up to values of 95-96% by weight.

6. Process according to claim 1, characterized in that in step (c) hydrogen peroxide is used at a concentration within the range of from 20 to 70% by weight, with the amount of hydrogen peroxide used (expressed as hydrogen peroxide at 100%) being within the range of from 3 to 7 parts by weight per each 100 parts by weight of sulfuric acid, when water is distilled off in step (b); or said amount being within the range of from 0.5 to 2.0 parts by weight per each 100 parts by weight of total sulfuric acid, when sulfur trioxide or oleum is added in step (b).

7. Process according to claim 6, characterized in that in said step (c) the reaction is carried out at a temperature within the range of from 120 to 150°C, with hydrogen peroxide being gradually added to the reaction mixture.

8. Process according to claim 1, characterized in that the exhausted acid contains chlorobenzene-sulfonic acid.

## Patentansprüche

1. Verfahren zur Herstellung von gereinigter Schwefelsäure und zur Gewinnung der organischen Fraktion aus einer erschöpften, aufgrund der Anwesenheit einer Arylsulfonsäure verunreinigten Schwefelsäure, dadurch gekennzeichnet, daß
(a) die erschöpfte Schwefelsäure einem Erhitzen auf eine Temperatur im Bereich von 180 bis 250°C in Anwesenheit einer Menge Wasser in flüssigem Zustand oder von überhitztem Wasserdampf von zumindest 17 Gew.Teilen je 100 Gew.Teile in dem Reaktionsmedium enthaltener Schwefelsäure, um die Arylsulfonsäure zu hydrolysieren (desufonieren) und Schwefelsäure und die entsprechende desulfonierte Arylverbindung zu bilden, wobei die letztgenannte aus dem Reaktionsmedium mit Hilfe einer azeotropen Destillation entfernt wird, unterzogen wird;
(b) der Wassergehalt des aus der Stufe (a) entstammenden Produkts vermindert wird, um die Konzentration der Schwefelsaüre auf einen Wert von zumindest 92 Gew.% zu erhöhen;
(c) das aus der Stufe (b) stammende Produkt einer Oxidationsbehandlung mit Wasserstoffperoxid unterzogen wird, die bei einer Temperatur im Bereich von 100 bis 180°C durchgeführt wird; und
(d) aus dem aus der Stufe (c) stammmenden Produkt Schwefelsäure als klare, farblose Flüssigkeit, die von organischen Verunreinigungen frei oder im wesentlichen frei ist, gewonnen wird.

2. Verfahren gemäß Anspruch 1, dadurch gekennzeichnet, daß in Stufe (a) die Behandlung mit einer Wassermenge im Bereich von 17 bis 33 Gew.Teilen und vorzugsweise 20 bis 30 Gew.Teilen je 100 Gew.Teile Schwefelsäure und bei einer Temperatur im Bereich von 190 bis 220°C durchgeführt wird.

3. Verfahren gemäß Anspruch 1, dadurch gekennzeichnet, daß in Stufe (b) die Schwefelsäure durch Abdestillieren von Wasser unter Vakuum konzentriert wird.

4. Verfahren gemäß Anspruch 1, dadurch gekennzeichnet, daß in Stufe (b) die Schwefelsäure mit Hilfe einer Zugabe von Schwefeltrioxid oder von Oleum konzentriert wird.

5. Verfahren gemäß Anspruch 1, dadurch gekennzeichnet, daß in Stufe (b) die Konzentration der Schwefelsäure bis auf Werte von 95 bis 96 Gew.% erhöht wird.

6. Verfahren gemäß Anspruch 1, dadurch gekennzeichnet, daß in Stufe (c) Wasserstoffperoxid in einer Konzentration im Bereich von 20 bis 70 Gew.% verwendet wird, wobei die Menge des verwendeten Wasserstoffperoxids (ausgedrückt als Wasserstoffperoxid von 100%) im Bereich von 3 bis 7 Gew.Teilen je 100 Gew.Teile Schwefelsäure liegt, wenn Wasser in Stufe (b) abdestilliert wird, oder diese Menge im Bereich von 0,5 bis 2,0 Gew.Teilen je 100 Gew.Teile Gesamtschwefelsäure liegt, wenn Schwefeltrioxid oder Oleum in Stufe (b) zugesetzt wird.

7. Verfahren gemäß Anspruch 6, dadurch gekennzeichnet, daß in Stufe (c) die Umsetzung bei einer Temperatur im Bereich von 120 bis 150°C durchgeführt wird, wobei Wassertoffperoxid allmählich zu der Reaktionsmischung zugesetzt wird.

8. Verfahren gemäß Anspruch 1, dadurch gekennzeichnet, daß die erschöpfte Säure Chlorbenzol-sulfonsäure enthält.

## Revendications

1. Procédé de production d'acide sulfurique purifié et de récupération de la fraction organique d'un rejet d'acide sulfurique pollué en raison de la présence d'un acide aryl-sulfonique, caractérisé en ce que :
a) on soumet ledit rejet d'acide sulfurique à un chauffage à une température de 180°C à 250°C, en présence d'une quantité d'eau liquide ou de vapeur d'eau surchauffée représentant au moins 17 parties en poids pour 100 parties en poids d'acide sulfurique contenu dans le milieu réactionnel, afin d'hydrolyser (désulfoner) l'acide aryl-sulfonique et de produire de l'acide sulfurique et du composé arylique désulfoné correspondant, ce dernier étant séparé du milieu réactionnel par distillation azéotropique ;
b) on réduit la teneur en eau du produit issu de l'étape (a), afin d'augmenter la concentration d'acide sulfurique jusqu'à une valeur d'au moins 92 % en poids ;
c) on soumet le produit issu de l'étape (b) à un traitement d'oxydation par du peroxyde d'hydrogène, effectué à une température de 100°C à 180°C; et
d) à partir du produit issu de l'étape (c), on récupère l'acide sulfurique sous la forme d'un liquide limpide incolore, ne contenant pas, ou pratiquement pas, d'impuretés organiques.

2. Procédé conforme à la revendication 1, caractérisé en ce que le traitement de l'étape (a) est effectué avec une quantité d'eau représentant 17 à 33 parties en poids, et de préférence 20 à 30 parties en poids, pour 100 parties en poids d'acide sulfurique, et à une température de 190°C à 220°C.

3. Procédé conforme à la revendication 1, caractérisé en ce que, dans l'étape (b), on concentre l'acide sulfurique en éliminant l'eau par distillation sous vide.

4. Procédé conforme à la revendication 1, caractérisé en ce que, dans l'étape (b), on concentre l'acide sulfurique par addition de trioxyde de soufre ou d'un oléum.

5. Procédé conforme à la revendication 1, caractérisé en ce que dans l'étape (b), on augmente la concentration d'acide sulfurique jusqu'à une valeur de 95 à 96 % en poids.

6. Procédé conforme à la revendication 1, caractérisé en ce que, dans l'étape (c), on utilise du peroxyde d'hydrogène à une concentration de 20 à 70 % en poids, la quantité de peroxyde d'hydrogène utilisée (exprimée en peroxyde d'hydrogène à 100 %) représentant 3 à 7 parties en poids pour 100 parties en poids d'acide sulfurique quand, dans l'étape (b), l'eau est éliminée par distillation, et cette quantité représentant 0,5 à 2,0 parties en poids pour 100 parties en poids de tout l'acide sulfurique quand, dans l'étape (b), on ajoute du trioxyde de soufre ou un oléum.

7. Procédé conforme à la revendication 6, caractérisé en ce que l'on effectue la réaction de l'étape (c) à une température de 120°C à 150°C, en ajoutant progressivement le peroxyde d'hydrogène au mélange réactionnel.

8. Procédé conforme à la revendication 1, caractérisé en ce que le rejet d'acide contient de l'acide chlorobenzène-sulfonique.
